# EUROPEAN PATENT APPLICATION

(11) **EP 4 796 752 A1**
(43) Date of publication of application: **26.08.2026**
(21) Application number: 25180911.7
(22) Date of filing: 04.06.2025
(51) Int. Cl.: F01D 5/28, F01D 17/02, F01D 21/00, F01D 21/04, F04D 29/32, G01L 5/00, F01D 25/00

(54) **AIRFOIL FOR AN AIRCRAFT ENGINE HAVING AN IMPACT SENSOR**

(30) Priority: 21.04.2025 US 202519184720; 24.02.2025 PL 45127225
(71) Applicant: General Electric Company, Cincinnati, Ohio 45215 (US)
(72) Inventor: MUCHENIK, Tomas, Evendale, 45215 (US); SIBBACH, Arthur, Evendale, 45215 (US); KHALID, Inenhe Mohammed, Evendale, 45215 (US); KUROPATWA, Micha, Evendale, 45215 (US)
(74) Representative: Openshaw & Co.

(57) **Abstract**

An airfoil (200, 300) including a core (200B, 300B), a shell (200A, 300A) covering the core (200B, 300B), and one or more sensors (202, 302) provided within the core (200B, 300B) or the shell (200A, 300A), or both. The one or more sensors (202, 302) are configured to generate an electromagnetic signal when the airfoil (200, 300) is subjected to an impact force, the electromagnetic signal being processed to detect an impact of an object on the airfoil (200, 300).

## Description

### CROSS REFERENCE TO RELATED APPLICATIONS

The present application claims the benefit of Polish Patent Application No. P.451272, filed on February 24, 2025, which is hereby incorporated by reference herein in its entirety.

### TECHNICAL FIELD

The present disclosure relates generally to an airfoil for an engine, the airfoil having an impact sensor.

### BACKGROUND

Turbine engines generally include a fan and a turbomachine arranged in flow communication with one another. The fan includes a plurality of airfoils or blades coupled to a rotor assembly.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, or structurally similar elements, or both.
FIG. 1A is a schematic, cross-sectional diagram of a turbine engine, taken along a longitudinal centerline axis of the turbine engine, according to an embodiment of the present disclosure.
FIG. 1B is a schematic, cross-sectional view of a turbine engine, taken along a longitudinal centerline axis of the turbine engine, according to another embodiment of the present disclosure.
FIG. 2A is a schematic, cross-sectional view along a chord of an airfoil having one or more sensors embedded within the airfoil, the one or more sensors being configured to communicate with a receiver wirelessly, according to an embodiment of the present disclosure.
FIG. 2B is a schematic, cross-sectional view along a span of the airfoil shown in FIG. 2A, according to an embodiment of the present disclosure.
FIG. 3 is a schematic, cross-sectional view of an airfoil having one or more sensors embedded within the airfoil, the one or more sensors being configured to communicate with a receiver through a wired connection, according to another embodiment of the present disclosure.
FIG. 4 schematically shows a section of a surface layer of a shell of the airfoil shown in FIG. 2A or the airfoil shown in FIG. 3 having a plurality of microspheres, according to an embodiment of the present disclosure.

### DETAILED DESCRIPTION

Features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "low" and "high," or their respective comparative degrees (e.g., "lower" and "higher," where applicable), when used with the compressor, turbine, shaft, or spool components, each refers to relative pressures or relative speeds, or both within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds or pressures, or minimum or maximum allowable speeds or pressures relative to normal, desired, steady state, etc., operation of the engine, or any combination thereof.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the term "axial" refers to directions and orientations that extend substantially parallel to a longitudinal centerline of the turbine engine. Moreover, the terms "radial" and "radially" refer to directions and orientations that extend substantially perpendicular to the longitudinal centerline of the turbine engine. In addition, as used herein, the term "circumferentially" refers to directions and orientations that extend arcuately about the longitudinal centerline of the turbine engine.

The term "composite material," as used herein, is indicative of a component material having two or more constituent materials. A composite material can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, a polymeric resin, a thermoplastic resin, bismaleimide (BMI) materials, polyimide materials, an epoxy resin, glass fibers, and silicon matrix materials. The composite may be formed of a matrix material and a reinforcing element, such as a fiber (referred to herein as a reinforcing fiber).

As used herein, "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle. The polymeric matrix material may include, for example, thermoset resin, bismaleimide (BMI) materials, polyimide materials, or thermoplastic resin.

The composite material may be used to form a composite component (e.g., a composite airfoil). As used herein, a "composite component" refers to a structure or a component including any suitable composite material. Composite components, such as a composite airfoil (e.g., a composite fan blade), can include several layers or plies of composite material (composite plies). The layers or plies can vary in stiffness, material, and dimension to achieve the desired composite component or composite portion of a component having a predetermined weight, size, stiffness, and strength. One or more layers of adhesive can be used in forming or coupling composite components. Adhesives can include resin and phenolics, wherein the adhesive can require curing at elevated temperatures or other hardening techniques.

As may be used herein, PMC refers to a class of materials. The PMC material may be a prepreg. A prepreg is a reinforcement material (e.g., a reinforcing fiber) preimpregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermoset resin polymers or thermoplastic resin polymers. Thermoplastic resin polymers are generally categorized as polymers that can be repeatedly softened and flowed when heated, and hardened, when sufficiently cooled due to physical rather than chemical changes. Notable example classes of thermoplastic resin polymers include nylons, thermoplastic polyesters, polyaryletherketones, and polycarbonate resins. A specific example of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead, thermally decompose when sufficiently heated. Notable examples of thermoset resin polymers include epoxy, bismaleimide (BMI), and polyimide resins.

Instead of using a prepreg with thermoplastic polymers, another non-limiting example utilizes a woven fabric. A woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin are then cured and removed from the mold. When removed from the mold, the composite component can require post-curing processing. RTM may be a vacuum assisted process. That is, the air from the cavity or the mold can be removed and replaced by the resin prior to heating or curing. The placement of the dry fibers can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) or coated prior to inclusion within the matrix, or both. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with the silicon carbide. A CMC material as used herein may be formed using any known or hereafter developed methods including, but not limited to, melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

The present disclosure provides one or more airfoils having one or more sensors configured to detect an event of an object (e.g., a bird) striking the one or more airfoils. After detecting the event of the object striking the one or more airfoils during flight, the one or more airfoils are inspected on the ground upon landing. The one or more sensors can be strain-measurement sensors to detect the object strike event, capacitance-measurement sensors or resistance-measurement measurement sensors to indicate delamination and damage, or accelerometer sensors embedded in a foam of the one or more airfoils. The one or more sensors can be rechargeable through an electrical wired connection. The one or more sensors can also be rechargeable wirelessly to make the system less invasive and to reduce the need for wiring. These sensors can also be configured to communicate (i.e., send an electromagnetic signal, receive an electromagnetic signal, or both) with a receiver via a wired connection or wirelessly to also reduce the need for wiring. The term "electromagnetic signal" is used broadly to mean any electrical signal or a signal in any wavelength including, but not limited to, radiofrequency, microwave, infrared, visible, ultraviolet, etc. In addition, the electromagnetic signal may also be carried by a laser beam.

The one or more sensors are configured to generate an electromagnetic signal (e.g., electrical signal) when subject to an impact force. The one or more sensors can be embedded in a composite airfoil (e.g., a rotating fan blade or stationary outer guide vanes (OGV), or both). The one or more sensors can be embedded in a polymer matrix composite or foam of the one or more airfoils. For example, the one or more sensors can be located within an upper half of the airfoil, that is, a half of the span of the airfoil that is closer to a tip of the airfoil, as opposed to the half of the span of the airfoil that is closed to the root of the airfoil. For example, the one or more sensors can be wireless sensors and are configured to communicate wirelessly with a receiver. The one or more sensors can also be self-powered, for example, by harvesting energy from a movement of the airfoil, for example, using a piezo-electric effect. The one or more sensors can also be coupled with pressure sensitive films or peeling paint to provide a way to double check that an object (e.g., a bird) impact took place.

The one or more sensors can be strain-measurement sensors that are internal or external to the one or more airfoils. The one or more strain-measurement sensors can be provided in a location of the one or more airfoils having high strain to detect object (e.g., bird) strikes. For example, the location can be selected after considering several bird sizes and locations of impact. The bird size is related to an amount of strain produced by an impact of a bird. A bird can impact anywhere on the blade. In addition, the closer a bird strike is to a location of the one or more sensors, the higher a response will be from the one or more sensors. Instead of strain-measurement sensors, accelerometer sensors can also be embedded in the foam or composite material (e.g., polymeric matrix composite (PMC)) of the one or more airfoils. Resistance-measurement sensors or inductance-measurement sensors, or both can also be used to quantify damage in the PMC and the foam when impacted by an object (e.g., bird).

In addition to the one or more sensors, a plurality of microspheres or microbeads can be incorporated in the surface layers of the airfoil. The microspheres or the microbeads may contain a dye or a pigment or other color changing substance that can be visible to the naked eye. When an object strikes the airfoil, at least some of the microspheres or microbeads fracture, releasing the dye or the pigment or other color changing substance contained in the microspheres or the microbeads, indicating that an object has impacted the airfoil. In an embodiment, the dye is a colored dye (e.g., red, blue, orange, etc.). The dye may be a fluorescent dye. The color can be selected depending on the external color of the airfoil.

For example, when an engine control (or a monitoring) system detects the occurrence of an impact or other fan blade stress event based on signal processing of the data from the embedded one or more sensors, a flag or other indicator is set to identify that an inspection of the fan blades is required. When on the ground, the airfoil can be inspected visually or with the aid of an imaging system for evidence of damage by looking for a color change on the surface of the airfoil. The presence of a color change indicates that at least some of the microspheres or the microbeads on the surface of the airfoil have released the dye or the pigment. The inspection may be completed manually using the naked eye or by an automatic inspection imaging system. For example, the imaging system may be programmed to detect the specific color of the dye associated with fractured microspheres.

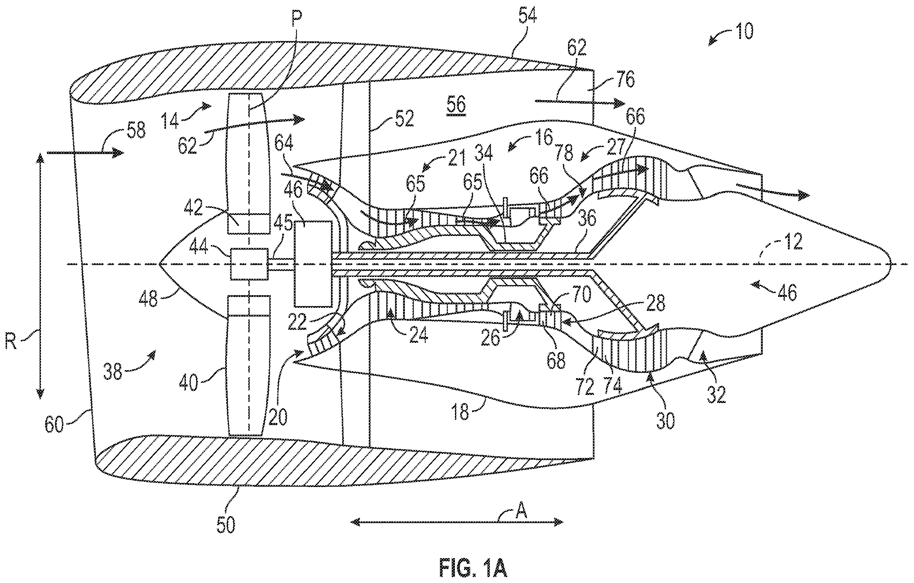

Referring now to the drawings, FIG. 1A is a schematic, cross-sectional diagram of a turbine engine 10, taken along a longitudinal centerline axis 12 of the turbine engine 10, according to an embodiment of the present disclosure. As shown in FIG. 1A, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 depicted in FIG. 1A generally includes an outer casing 18 that is substantially tubular and defines an annular inlet 20. As schematically shown in FIG. 1A, the outer casing 18 encases, in serial flow relationship, a compressor section 21 including a booster or a low-pressure (LP) compressor 22 followed downstream by a high-pressure (HP) compressor 24, a combustion section 26, a turbine section 27 including a high-pressure (HP) turbine 28 followed downstream by a low-pressure (LP) turbine 30, and a jet exhaust nozzle section 32. A high-pressure (HP) shaft 34 or a spool drivingly connects the HP turbine 28 to the HP compressor 24, to rotate the HP turbine 28 and the HP compressor 24 in unison. A low-pressure (LP) shaft 36 or a spool drivingly connects the LP turbine 30 to the LP compressor 22, to rotate the LP turbine 30 and the LP compressor 22 in unison. The compressor section 21, the combustion section 26, the turbine section 27, and the jet exhaust nozzle section 32 together define a core air flowpath.

For the embodiment depicted in FIG. 1A, the fan section 14 includes a fan 38 (e.g., a variable pitch fan) having a plurality of fan blades 40 (airfoils) coupled to a disk 42 in a spaced apart manner. As depicted in FIG. 1A, the fan blades 40 extend outwardly from the disk 42 generally along the radial direction R. Each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36 across a power gearbox, also referred to as a gearbox assembly 46. The gearbox assembly 46 is shown schematically in FIG. 1A. The gearbox assembly 46 includes a plurality of gears for adjusting the rotational speed of the fan shaft 45 and, thus, the fan 38 relative to the LP shaft 36.

Referring still to the embodiment of FIG. 1A, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 or at least a portion of the turbo-engine 16, or both. The nacelle 50 is supported relative to the turbo-engine 16 by a plurality of circumferentially spaced outlet guide vanes 52 (stator airfoils). Moreover, a downstream section 54 of the nacelle 50 extends over an outer portion of the turbo-engine 16 to define a bypass airflow passage 56 therebetween.

During operation of the turbine engine 10, a volume of air 58 enters the turbine engine 10 through an inlet 60 of the nacelle 50 or the fan section 14, or both. As the volume of air 58 passes across the fan blades 40 (rotating airfoils), a first portion of air 62 is directed or routed into the bypass airflow passage 56, and a second portion of air 64 is directed or is routed into the upstream section of the core air flowpath, or, more specifically, into the annular inlet 20 of the LP compressor 22. The ratio between the first portion of air 62 and the second portion of air 64 is commonly known as a bypass ratio. The pressure of the second portion of air 64 is then increased, forming compressed air 65, and the compressed air 65 is routed through the HP compressor 24 and into the combustion section 26, where the compressed air 65 is mixed with fuel and burned to generate combustion gases 66.

The combustion gases 66 are routed into the HP turbine 28 and expanded through the HP turbine 28 where a portion of thermal or of kinetic energy, or both from the combustion gases 66 is extracted via sequential stages of HP turbine stator vanes 68 (stator airfoils) that are coupled to the outer casing 18 and HP turbine rotor blades 70 (rotating airfoils) that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of the thermal energy and the kinetic energy is extracted from the combustion gases 66 via sequential stages of LP turbine stator vanes 72 (stator airfoils) that are coupled to the outer casing 18 and LP turbine rotor blades 74 (rotating airfoils) that are coupled to the LP shaft 36, thus, causing the LP shaft 36 to rotate, thereby supporting operation of the LP compressor 22 and rotation of the fan 38 via the gearbox assembly 46.

The combustion gases 66 are subsequently routed through the jet exhaust nozzle section 32 of the turbo-engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the turbo-engine 16.

The turbine engine 10 depicted in FIG. 1A is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. Moreover, in other embodiments, any other suitable number or configuration of compressors, turbines, shafts, or a combination thereof may be provided. In still other embodiments, aspects of the present disclosure may be incorporated into any other suitable turbine engine, such as, for example, turbofan engines, propfan engines, turbojet engines, turboprop, or turboshaft engines.

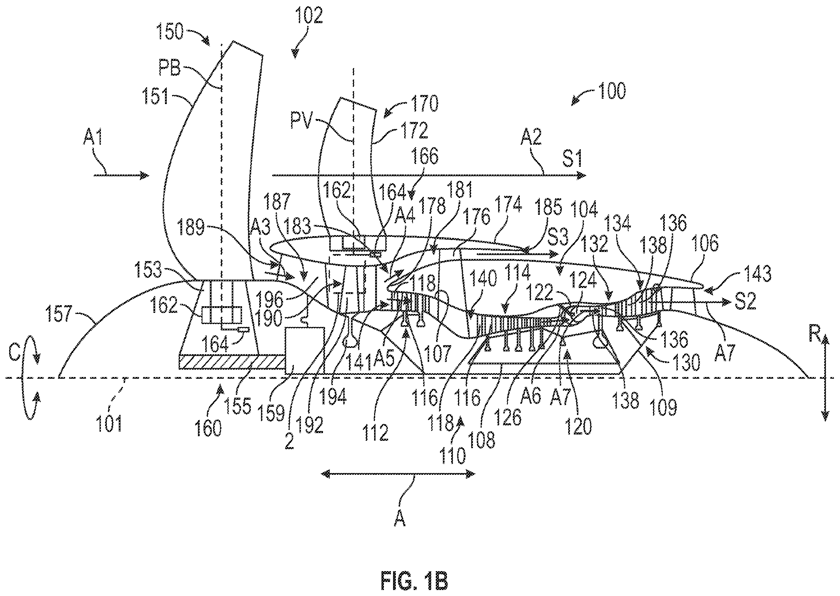

FIG. 1B is a schematic, cross-sectional view of a turbine engine 100 that can be used on an aircraft, according to an embodiment of the present disclosure. The turbine engine 100 has an axial direction A (extending parallel to a longitudinal centerline (axis) 101, shown for reference in FIG. 1B), a radial direction R, and a circumferential direction C. The circumferential direction C extends in a direction rotating about the longitudinal centerline (axis) 101 (the axial direction A). In the embodiment depicted in FIG. 1B, the turbine engine 100 is an unducted fan engine or an open fan engine. The turbine engine 100 is a "three-stream engine" having three distinct streams (labeled S1, S2, and S3 in FIG. 1B) of thrust-producing airflow during operation, as detailed further below. The turbine engine 100 includes a fan section 102 and a turbo-engine 104 disposed downstream from the fan section 102.

The turbo-engine 104 depicted in FIG. 1B includes, in serial flow relationship, a compressor section 110, a combustion section 120, and a turbine section 130. The turbo-engine 104 is substantially enclosed within a core cowl 106 that is substantially tubular and annularly surrounds the turbo-engine 104. The core cowl 106 defines a core inlet 141 and, in this embodiment, the core inlet 141 is annular. As schematically shown in FIG. 1B, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130, together, define, at least in part, a core air flow path, also referred to as a core duct 140, extending from the core inlet 141 to the core air exhaust nozzle 143, and through which core air A5 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air A5 passing through the stage. In a single compressor stage, the plurality of compressor blades 116 can be provided in a ring, extending radially outwardly relative to the longitudinal centerline (axis) 101 from a blade platform to a blade tip (e.g., extend in the radial direction R). The compressor blades 116 can be a part of a compressor rotor that includes a disk, with compressor blades 116 extending radially from the disk. Other configurations of the compressor rotor can be used, including, for example, blisks where the disk and the compressor blades 116 are integrally formed with each other to be a single piece. The corresponding static compressor vanes 118 are positioned upstream of and adjacent to the rotating compressor blades 116. The static compressor vanes 118 for a stage of the compressor can be mounted to a core casing 107 in a circumferential arrangement. The core casing 107 may define, at least in part, the core air flow path (the core duct 140). Each compressor stage can be used to sequentially compress the core air A5 flowing through the core air flow path (the core duct 140), generating compressed air A6. Any suitable number of compressor blades 116, static compressor vanes 118, and compressor stages can be used.

Each of the HP turbine 132 and the LP turbine 134 also may include a plurality of turbine stages. In each stage, a plurality of turbine blades 136 rotates relative to a corresponding plurality of static turbine vanes 138 (also called a nozzle) to extract energy from combustion gases A7 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are positioned upstream of and adjacent to the rotating turbine blades 136. The static turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air A6 from the compressor section 110 to form a fuel and air mixture, and combusted, generating combustion products (i.e., combustion gases A7). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases A7 are discharged from the combustion chamber 124. These combustion gases can be directed into the turbine blades 136 of the HP turbine 132 and, then, the turbine blades 136 of the LP turbine 134, and the combustion gases A7 drive (rotate) the turbine blades 136 of the HP turbine 132 and the LP turbine 134. Any suitable number of turbine blades 136, static turbine vanes 138, and turbine stages can be used. After flowing through the turbine section 130, the combustion gases A7 are exhausted from the turbine engine 100 through the core air exhaust nozzle 143 to provide propulsive thrust.

The turbine engine 100 and, more specifically, the turbo-engine 104, further includes one or more drive shafts. As noted above, the turbo-engine 104 includes the HP shaft 108 drivingly connecting the HP turbine 132 to the HP compressor 114, and the LP shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases A7 are routed into the HP turbine 132 and expanded through the HP turbine 132 where a portion of thermal energy or kinetic energy from the combustion gases A7 is extracted via the one or more stages of the turbine blades 136 and static turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases A7 do work on the HP turbine 132. The combustion gases A7 are then routed into the LP turbine 134 and expanded through the LP turbine 134. Here, a second portion of the thermal energy or the kinetic energy is extracted from the combustion gases A7 via one or more stages of the turbine blades 136 and the static turbine vanes 138 of the LP turbine 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases A7 do work on the LP turbine 134. The HP shaft 108 and the LP shaft 109 are disposed coaxially about the longitudinal centerline (axis) 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline (axis) 101 and, as discussed above, coupled to rotatable elements such as the compressor rotors and the turbine rotors.

The fan section 102 shown in FIG. 1B includes a fan, which is referred to herein as a primary fan 150. In the depicted embodiment, the primary fan 150 is an open rotor fan, also referred to as an unducted fan. The primary fan 150 has a plurality of primary fan blades 151 coupled to a fan disk 153. As depicted in FIG. 1B, the primary fan blades 151 extend outwardly from the fan disk 153 generally along the radial direction R. One primary fan blade 151 is depicted in FIG. 1B, but the plurality of primary fan blades 151 can be arranged in equal spacing around the longitudinal centerline (axis) 101. The primary fan blades 151 and the fan disk 153 are rotatable, together, about the longitudinal centerline (axis) 101 by a fan shaft 155. The fan disk 153 is covered by a fan hub 157 that is aerodynamically contoured to promote an airflow through the plurality of primary fan blades 151. In this embodiment, the fan hub 157 is rotatable together with the primary fan blades 151 and the fan disk 153.

As shown in FIG. 1B, the fan shaft 155 is coupled with the LP shaft 109 via a speed reduction gearbox or a power gearbox, also referred to as a gearbox assembly 159. The LP shaft 109 is thus driving coupled to the primary fan 150. The gearbox assembly 159 is shown schematically in FIG. 1B. The gearbox assembly 159 includes a plurality of gears for adjusting the rotational speed of the fan shaft 155 and, thus, the rotational speed of the primary fan 150 relative to the rotational speed of the LP shaft 109. The gearbox assembly 159 can be used to reduce the rotational speed to a speed that more efficient for the primary fan 150. The gearbox assembly 159 may have a gear ratio of 4:1 to 12:1, or 7:1 to 12:1, or 4:1 to 10:1, or 5:1 to 9:1, or 6:1 to 9:1, and can be configured in an epicyclic star configuration or a planet gear configuration. The gearbox assembly 159 can have a gear ratio of 4:1 to 10:1 for the unducted fan engine (e.g., the turbine engine 100). The gearbox assembly 159 can be a single stage gearbox or a compound gearbox (e.g., having a plurality of stages).

In the case of a variable pitch fan, as depicted in FIG. 1B, for example, the plurality of primary fan blades 151 is rotatable relative to the fan disk 153 about a fan blade pitch axis PB. Each of the primary fan blades 151 can be connected to the fan disk 153 by a pitch bearing 162 that allows for rotation of the primary fan blades 151 about the pitch axis PB. The primary fan blades 151 are rotatable within the pitch bearing 162 by a pitch actuator 164 operatively coupled to the primary fan blades 151 to vary the pitch of a corresponding primary fan blades 151. One or more pitch actuators 164 can be used, and, in some embodiments, the pitch actuators 164 rotate the primary fan blades 151 in unison. A fan actuation system 160 controls the one or more pitch actuators 164 to change the pitch of the primary fan blades 151 about their respective pitch axis PB. The fan actuation system 160 can be disposed within the fan hub 157.

The fan section 102 includes a plurality of fan guide vanes 172 (only one shown in FIG. 1B). The fan guide vanes 172 are circumferentially spaced and disposed around the longitudinal centerline (axis) 101 as part of a fan guide vane array 170. In the embodiment depicted in FIG. 1B, the fan guide vanes 172 are static airfoils and are not rotatable about the longitudinal centerline (axis) 101. Each fan guide vane 172 is mounted to a fan cowl 174 and extends outwardly from the fan cowl 174 generally along the radial direction R. In the case of a variable pitch fan, as depicted in FIG. 1B, for example, the plurality of fan guide vanes 172 is rotatable relative to the fan cowl 174 about a fan guide vane pitch axis PV. A fan guide vane actuation system 166 can be used to change the pitch of the fan guide vanes 172. The fan guide vane actuation system 166 can operate similarly to the fan actuation system 160, discussed above, and that discussion applies here. The same reference numerals are thus used for the pitch bearings 162 and the pitch actuators 164 of the fan guide vane actuation system 166.

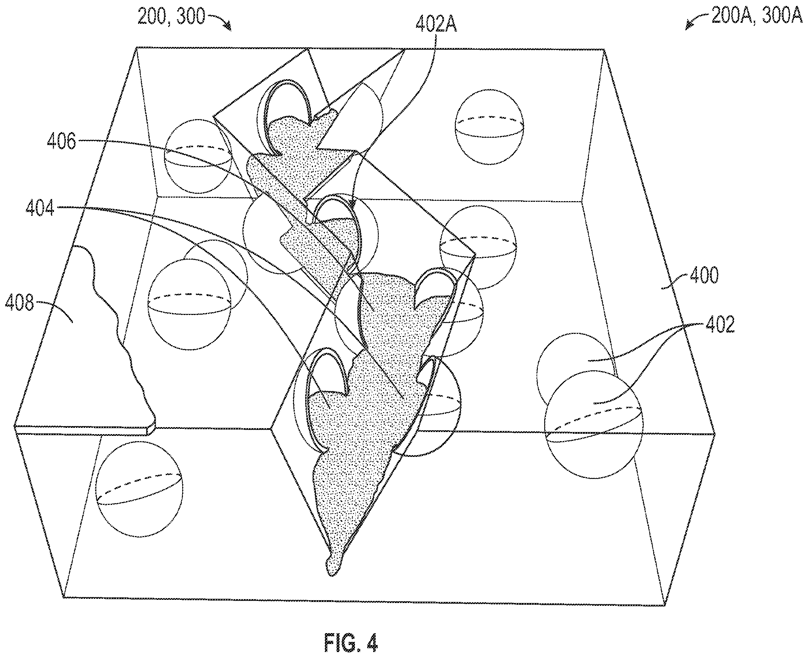

The fan cowl 174 annularly encases at least a portion of the core cowl 106 and is generally positioned outward of the core cowl 106 along the radial direction R. Together, the fan cowl 174 and the core cowl 106 define an outer casing of the turbine engine 100. A downstream section of the fan cowl 174 extends over a forward portion of the core cowl 106 to define a fan flow path, also referred to as a fan duct 181. Incoming air enters the fan duct 181 through a fan duct inlet 183 and exits through a fan exhaust nozzle 185 to produce propulsive thrust. The fan duct 181 is an annular duct positioned generally outward of the core duct 140 along the radial direction R. The fan cowl 174 and the core cowl 106 are connected together and supported by a plurality of struts 176 (only one shown in FIG. 4). The struts 176 are circumferentially spaced about longitudinal centerline (axis) 101 and extend radially outward from the core cowl 106. Each strut of the plurality of struts 176 is aerodynamically contoured to direct air flowing thereby.

The turbine engine 100 includes an inlet duct 187. The inlet duct 187 extends between an engine inlet 189 and the core inlet 141, and the fan duct inlet 183. The engine inlet 189 is defined generally at the forward end of the fan cowl 174 and is positioned between the primary fan 150 and the fan guide vanes 172 along the axial direction A. The inlet duct 187 is an annular duct that is positioned inward of the fan cowl 174 along the radial direction R. Air flowing downstream along the inlet duct 187 is split, not necessarily evenly, into the core duct 140 and the fan duct 181 by a splitter 178 of the core cowl 106. The inlet duct 187 is wider than the core duct 140 in the radial direction R. The inlet duct 187 is also wider than the fan duct 181 in the radial direction R.

The fan section 102 also includes a mid-fan 190. The mid-fan 190 includes a plurality of mid-fan blades 192 (only one shown in FIG. 4). The plurality of mid-fan blades 192 is rotatable about the longitudinal centerline axis 101. In the depicted embodiment, the mid-fan 190 is drivingly coupled with the LP turbine 134 via the LP shaft 109. The plurality of mid-fan blades 192 can be arranged in equal circumferential spacing about the longitudinal centerline axis 101. The mid-fan blade 192 can be a part of a rotor that includes a central hub, such as a disk 194, and each mid-fan blade 192 of the plurality of mid-fan blades 192 extends radially from the disk 194. Other configurations of the compressor rotor can be used, including, for example, blisks where the disk 194 and the mid-fan blades 192 are integrally formed with each other to be a single piece.

The plurality of mid-fan blades 192 is annularly surrounded (e.g., ducted) by the fan cowl 174. In this regard, the mid-fan 190 is positioned inward of the fan cowl 174 along the radial direction R. The mid-fan 190 is positioned within the inlet duct 187 upstream of both the core duct 140 and the fan duct 181. A ratio of a span of a primary fan blades 151 to that of a mid-fan blade 192 (a span is measured from a root to a tip of the respective blade) is greater than two and less than ten to achieve the desired benefits of the third stream (S3), particularly, the additional thrust the third stream (S3) offers to the engine, which can enable a smaller diameter primary fan blade 151. A plurality of inlet mid-fan vanes 196 is positioned upstream of and adjacent to the rotating mid-fan blade 192. The inlet mid-fan vanes 196 can be mounted to the fan cowl 174 in a circumferential arrangement.

During operation of the turbine engine 100, an initial airflow or incoming air A1 passes through the primary fan blades 151 of the primary fan 150 and splits into a first airflow (a first portion of air, which is referred to herein as primary bypass air A2) and a second airflow (a second portion of air, which is referred to herein as engine air A3). The primary bypass air A2 bypasses the engine inlet 189 and flows generally along the axial direction A outward of the fan cowl 174 along the radial direction R. The primary bypass air A2 is accelerated by the primary fan blades 151 and passes through the fan guide vanes 172. The primary bypass air A2 then continues downstream to produce a primary propulsion stream or a first thrust stream S1. A majority of the net thrust produced by the turbine engine 100 is produced by the first thrust stream S1.

The engine air A3 is directed or routed into the inlet duct 187 and enters the inlet duct 187 through the engine inlet 189. The engine air A3 flowing downstream through the inlet duct 187 flows through the mid-fan blades 192 of the mid-fan 190 and is compressed by the rotating mid-fan blade 192. After flowing through the mid-fan blade 192, the engine air A3 is split by the splitter 178 into a third airflow (a third portion of air, which is referred to herein as secondary bypass air A4) and a fourth airflow (a fourth portion of air, which is referred to herein as core air A5). The core air A5 is directed or is routed into an upstream section of the core duct 140, or, more specifically, into the core inlet 141. The core air A5 flows through the core duct 140 (as discussed above) to generate combustion gases A7 and exits the core duct 140 through the core air exhaust nozzle 143 to produce a core air stream, also referred to as a second thrust stream S2.

The secondary bypass air A4 is directed or routed into the fan duct 181 and enters the fan duct 181 through the fan duct inlet 183. The secondary bypass air A4 flows generally along the axial direction A through the fan duct 181 and is exhausted from the fan duct 181 through the fan duct outlet 185 to produce a third stream, also referred to as a third thrust stream S3. The third thrust stream S3 is a secondary air stream that increases fluid energy to produce a minority of total propulsion system thrust. In some embodiments, a pressure ratio of the third stream is higher than that of the primary propulsion stream (e.g., a bypass or a propeller driven propulsion stream). The thrust can be produced through a dedicated nozzle or through mixing of the secondary air stream with the primary propulsion stream or a core air stream, e.g., into a common nozzle. In certain embodiments, an operating temperature of the secondary air stream is less than a maximum compressor discharge temperature for the engine. Furthermore, in certain embodiments, aspects of the third stream (e.g., airstream properties, mixing properties, or exhaust properties), and, thereby, a percent contribution to total thrust, are passively adjusted during engine operation or can be modified purposefully through the use of engine control features (such as fuel flow, electric machine power, variable stators, variable inlet guide vanes, valves, variable exhaust geometry, or fluidic features) to adjust or to improve overall system performance across a broad range of potential operating conditions.

The turbine engine 100 shown in FIG. 1B and discussed herein (e.g., an unducted fan engine) is provided by way of example only. In other embodiments, any other suitable engine can be utilized with aspects of the present disclosure. For example, in other embodiments, the engine can be any other suitable gas turbine engine, such as a high bypass turbofan engine, a turboshaft engine, a turboprop engine, a turbojet engine, and the like. In such a manner, in other embodiments, the gas turbine engine may have other suitable configurations, such as other suitable numbers or arrangements of shafts, compressors, turbines, fans, etc. Further, although the turbine engine 100 is shown as a geared, variable pitch turbofan engine, in other embodiments, the turbine engine 100 can be a direct drive turbine engine or can be a fixed-pitch turbine engine. In other embodiments, the primary fan 150 and the fan guide vane array 170 can be ducted or shrouded, including a nacelle or a shroud that circumferentially surrounds one or both of the primary fan 150 and the fan guide vane array 170, either collectively or individually. Further, still, in alternative embodiments, aspects of the present disclosure can be incorporated into, or otherwise utilized with, any other type of engine, such as reciprocating engines.

The turbine engine 100 discussed herein is suitable for use on aircraft. Suitable aircraft include, for example, airplanes and unmanned aerial vehicles (UAV). In other embodiments, the turbine engine can be any other turbine engine, such as an industrial turbine engine incorporated into a power generation system, or a nautical turbine engine on a ship or other vessel.

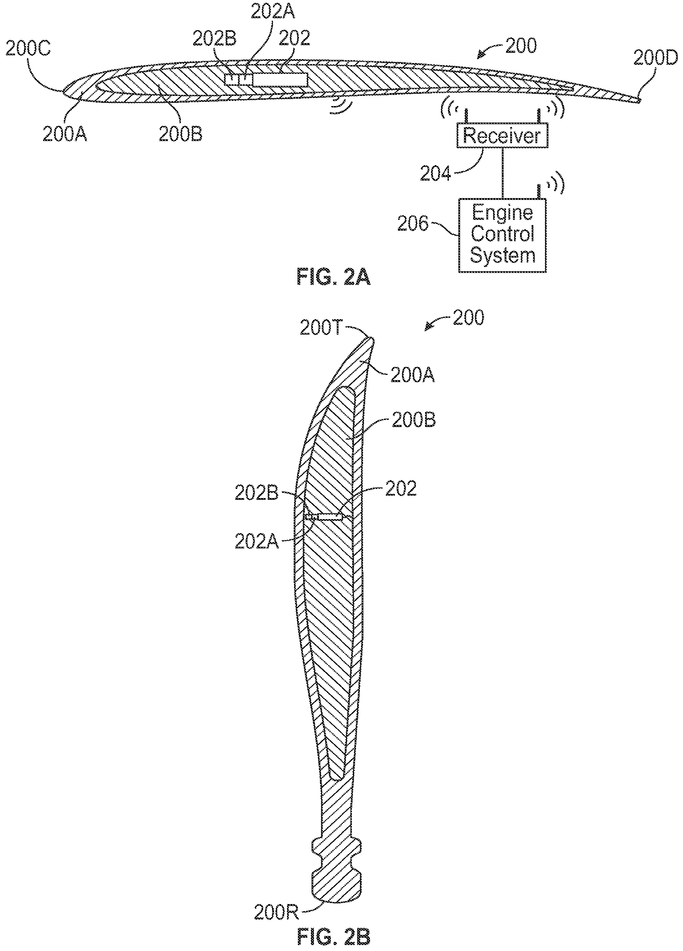

FIG. 2A is a schematic, cross-sectional view along the chord of an airfoil 200 having one or more sensors 202 embedded within the airfoil 200, according to an embodiment of the present disclosure. The airfoil 200 can be any of the fan blade 40, the outlet guide vane 52, the HP turbine stator vane 68, the HP turbine rotor blade 70, the LP turbine stator vane 72, or the LP turbine rotor blade 74 of the turbine engine 10 shown in FIG. 1A. The airfoil 200 can also be any of the primary fan blade 151, the fan guide vane 172, the compressor blade 116, the static compressor vane 118, the turbine blade 136, the static turbine vane 138, the mid-fan blade 192, and the inlet mid-fan vane 196 of the turbine engine 100 shown in FIG. 1B. The one or more sensors 202 can be provided in a rotating fan blade or a stationary outer guide vane (OGV), or both. However, the airfoil 200 is not limited to an airfoil in a turbine engine such as the turbine engine 10 (shown in FIG. 1A) or the turbine engine 100 (shown in FIG. 1B) only, but can be any other airfoil, such as an airfoil of a wind turbine, or an airfoil in any vehicle engine, etc.

The one or more sensors 202 are configured to detect an event of an object (e.g., a bird) striking the airfoil 200 or to detect an impact of the object on the airfoil 200. For example, after detecting the event of the object striking the airfoil 200, the airfoil 200 is sent for inspection on the ground. Although only one sensor 202 is shown in FIG. 2A, a plurality of sensors 202 can also be used. The plurality of sensors can be provided at various selected locations along the span of the airfoil 200. A span of the airfoil 200 is measured from a root of the airfoil 200 to a tip of the airfoil 200. The one or more sensors 202 can be internal of or external to the airfoil 200.

In an embodiment, the one or more sensors 202 can be a strain-measurement sensor (e.g., a piezo-electric sensor) to detect an object strike event, a capacitance-measurement sensor or a resistance-measurement sensor to indicate delamination or damage, or an accelerometer sensor to detect a force from an impact of an object on the airfoil 200.

For example, strain-measurement sensors (also referred to as strain sensors or strain transducers) can be used. A strain transducer is a device that detects and converts mechanical force into an electrical signal, which can then be measured. Strain sensors are commonly used to measure strain, which is a non-dimensional value that represents the change in length of a material relative to its original length. Strain can be caused by applied stress, such as bending, shear, axial, or torsional force. Instead of or in addition to strain-measurement sensors, accelerometer sensors (also referred to as accelerometers) can also be embedded in the one or more airfoils. An accelerometer is a device that uses a piezoelectric material to measure a vibration, or an acceleration of motion, of a structure. The force caused by vibration or a change in motion (acceleration) causes a mass of the accelerometer to "squeeze" and to produce an electrical charge that is proportional to the force. In an embodiment, a vibration sensor may be advantageously located near the tip of the airfoil 200 where the greatest deflection occurs, whereas a strain sensor may be located closer to the root of the airfoil 200. Resistance-measurement sensors or inductance-measurement sensors, or both can also be used to quantify damage in a material of the airfoil 200 when impacted by an object (e.g., a bird).

In an embodiment, the airfoil 200 may include a shell 200A and a core 200B, the shell 200A covering the core 200B. In an embodiment, the shell 200A can be made from a composite material such as a polymeric matrix composite (PMC) or a ceramic matrix composite (CMC), or carbon fibers imbedded in a thermoset matrix. In another embodiment, the shell 200A may include a metallic shell structure or a polymeric shell structure with or without reinforcements. The core 200B may include a foam material. Alternatively, the core 200B may include a honeycomb structure or other similar structure having voids. In an embodiment, the one or more sensors 202 can be embedded in the shell 200A (e.g., in the PMC) or embedded in the core 200B (e.g., foam) of the airfoil 200, or both. The one or more sensors 202 can be positioned anywhere between a leading edge 200C of the airfoil 200 and a trailing edge 200D of the airfoil 200.

FIG. 2B is a schematic, cross-sectional view along a span of the airfoil 200, according to an embodiment of the present disclosure. For example, the one or more sensors 202 can be located within an upper half of the airfoil 200. The upper half of the airfoil 200 corresponds to a half of the span of the airfoil 200 that is closer to a tip 200T of the airfoil 200, as opposed to a half of the span of the airfoil 200 that is closer to a root 200R of the airfoil 200. The one or more sensors 202 (e.g., strain-measurement sensors) can be provided in a location of the airfoil 200 that is subjected to higher strain to detect object (e.g., bird) strikes on the airfoil 200. The term "higher strain" relates to a strain from an impact that is relatively higher than an aerodynamic strain produced in normal operation of the airfoil 200. For example, the location can be selected after considering several object sizes (e.g., bird sizes) and various locations of impact. For example, the root 200R of the airfoil 200 may be more sensitive to strain than the tip 200T of the airfoil 200 because the airfoil 200 is a cantilevered structure. As a result, a strain sensor may be placed closer to the root 200R of the airfoil 200. Each airfoil 200 would have regions of higher strain and regions of lower strain. The one or more sensors 202 (e.g., strain-measurement sensors) can be positioned accordingly within the airfoil 200 in a location along the span of the airfoil 200 that are prone to higher strain.

The one or more sensors 202 are configured to generate an electromagnetic signal when the airfoil 200 is subjected to an impact force. The electromagnetic signal is processed to detect an impact of an object (e.g., a bird) on the airfoil 200. The one or more sensors 202 can be wired or wireless. In an embodiment, as shown in FIG. 2A, the one or more sensors 202 can be configured to communicate (i.e., to send or to receive an electromagnetic signal, or both) with a receiver 204 wirelessly, to reduce the need for wiring the one or more sensors 202 to the receiver 204. The receiver 204 can be a signal processing unit that is configured to receive and to process the electromagnetic signal from the one or more sensors 202, and to output sensor data based on the electromagnetic signal from the one or more sensors 202 indicating the impact of the object on the airfoil 200. The receiver 204 in turn can also communicate wirelessly or through a wired connection with an engine control (or monitoring) system 206. The receiver can be configured to transmit the output sensor data to the engine control system 206. The engine control system 206 can be configured to provide an indication of the status of the turbine engine 10 (shown in FIG. 1A) or the turbine engine 100 (shown in FIG. 1B) including a status of the airfoil 200 based on the output sensor data, for example, when the one or more sensors 202 detect an impact. In an embodiment, as shown in FIG. 2A, the receiver 204 is located outside of the airfoil 200. In an embodiment, as shown in FIG. 2A, the engine control system 206 is also located outside of the airfoil 200. The receiver 204 is configured to communicate with the engine control system 206 wirelessly or through a wired connection.

In an embodiment, the one or more sensors 202 are provided with an energy storage unit 202A (e.g., a battery, a capacitor, etc.). The energy storage unit 202A (e.g., battery or capacitor) provides sufficient power to power the one or more sensors 202. In another embodiment, instead of, or in addition to the energy storage unit 202A, an energy harvesting unit 202B can also be provided. In an embodiment, the one or more sensors 202 can be self-powered using the energy harvesting unit 202B. The energy harvesting unit 202B can be, for example, a piezoelectric device that uses a piezoelectric effect that can harvest energy from a movement of the airfoil 200 and convert the movement of the airfoil 200 into electrical energy to power the one or more sensors 202. In an embodiment, the energy harvesting unit 202B can be configured to harvest energy from heat, electromagnetic energy, or light and to convert the heat, electromagnetic energy, or light into electrical energy to power the one or more sensors 202. In an embodiment, the energy storage unit 202A can be rechargeable wirelessly to make the system less invasive and to reduce the need for wiring. For example, a magnetic charger can be used to recharge the energy storage unit 202A wirelessly. The magnetic charger operates by using magnetic induction to transfer energy from an electrical source to a device to charge the energy storage unit of the device. Alternatively, the one or more sensors 202 can be powered using circuits or electrical wires, or both connected to a power source.

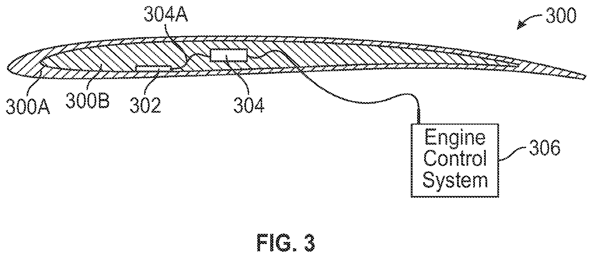

FIG. 3 is a schematic, cross-sectional view of an airfoil 300 having one or more sensors 302 embedded within the airfoil 300, along the chord of the airfoil 300, according to an embodiment of the present disclosure. The embodiment shown in FIG. 3 is similar in many aspects to the embodiment shown in FIG. 2A. Similar features will not be further described and only differences are noted. Similar to the airfoil 200, the airfoil 300 also has a shell 300A, for example, made from a composite material such as a polymeric matrix composite (PMC), and a core 300B, for example made from a foam material. In an embodiment, the one or more sensors 302 can be embedded in (i.e., within and surrounded by) the core 300B (e.g., foam) of the airfoil 200 (as shown in FIG. 3). However. the one or more sensors 302 can also be embedded in (i.e., within and surrounded by) the shell 300A (e.g., in the PMC). In yet another embodiment, the one or more sensors 302 can be positioned at the interface between the shell 300A and the core 300B. For example, the one or more sensor 302 can be positioned so as to be in contact with the shell 300A and with the core 300B.

As shown in FIG. 3, the one or more sensors 302 can be configured to communicate (i.e., to send or to receive an electromagnetic signal, or both) with a receiver 304 through a wired connection 304A. As shown in FIG. 3, the receiver 304 is located inside of the airfoil 300. In this embodiment, the airfoil 300 includes the receiver 304. The receiver 304 can be a signal processing unit that is configured to receive and to process the electromagnetic signal (e.g., electrical signal) from the one or more sensors 302 via the wired connection 304A and to output sensor data based on the electromagnetic signal indicating the impact of the object on the airfoil 300. The receiver 304 in turn can communicate wirelessly or through a wired connection (as shown in FIG. 3) with an engine control (or monitoring) system 306. The receiver 304 can be configured to transmit the output sensor data to the engine control system 306. The engine control system 306 may be similar to the engine control system 206 (shown in FIG. 2A). As shown in FIG. 3, the engine control system 306 is located outside of the airfoil 300.

Similar to the embodiment shown in FIG. 2A, an energy storage unit similar to the energy storage unit 202A (shown in FIG. 2A) can also be provided for the one or more sensors 302. The energy storage unit (e.g., a battery or a capacitor) provides sufficient power to power the one or more sensors 302. In another embodiment, similar to the embodiment shown in FIG. 2A, instead of, or in addition to the energy storage unit, an energy harvesting unit (similar to the energy harvesting unit 202B shown in FIG. 2A) can also be provided. In an embodiment, the one or more sensors 302 can be self-powered using the energy harvesting unit. The energy harvesting unit can be, for example, a piezoelectric device that uses a piezoelectric effect that can harvest energy from a movement of the airfoil 300 and convert the movement of the airfoil 300 into electrical energy to power the one or more sensors 302. In an embodiment, the energy harvesting unit can be configured to harvest energy from heat, electromagnetic energy, or light, and to convert the heat, the electromagnetic energy, or the light into electrical energy to power the one or more sensors 302. In an embodiment, the energy storage unit can be rechargeable wirelessly to make the system less invasive and to reduce the need for wiring. For example, a magnetic charger can be used to recharge the energy storage unit wirelessly. The magnetic charger operates by using magnetic induction to transfer energy from an electrical source to a device to charge the energy storage unit of the device. Alternatively, the one or more sensors 302 can be powered using circuits or electrical wires, or both connected to a power source.

In addition to the one or more sensors 202, 302, a plurality of microspheres or microbeads can be incorporated in a surface layer of the shell 200A of the airfoil 200 or the shell 300A of the airfoil 300.

FIG. 4 schematically shows a section of a surface 400 of the shell 200A of the airfoil 200 of FIG. 2A or the shell 300A of the airfoil 300 of FIG. 3 having a plurality of microspheres 402, according to an embodiment of the present disclosure. The plurality of microspheres 402 are incorporated in the surface 400 of the shell 200A, 300A of the airfoil 200, 300. In an embodiment, the plurality of microspheres 402 can be distributed evenly on the surface 400 of the shell 200A, 300A. In another embodiment, the plurality of microspheres 402 can be provided at one or more preselected locations on the surface 400 of the shell 200A, 300A. The plurality of microspheres 402 may contain a dye or a pigment 404 (i.e., a colored dye) that can be visible to the naked eye or that is visible to an imaging device. In an embodiment, the dye is a colored dye (e.g., red, blue, orange, etc.). The color of the colored dye can be selected depending on the external color of the airfoil 200, 300. The color can be selected depending on the color of the surface 400 of the shell 200A, 300A of the airfoil 200, 300. The color of the colored dye can be selected to be distinguishable from the color of the surface 400. In an embodiment, the dye or the pigment 404 can also be a color changing substance 406 that changes color when exposed to light used for inspection of the airfoil 200, 300. The plurality of microspheres 402 are configured to fracture when the airfoil 200, 300 having the plurality of microspheres 402 is subjected to a force from an object striking the airfoil 200, 300 and release the dye or the pigment 404 contained therein to indicate that the airfoil 200, 300 is subjected to the impact force.

**In** operation, when an object (not shown) strikes the surface 400 of the airfoil 200, 300, at least a portion 402A of the plurality of microspheres 402 that are at or near a site of the impact, fracture due to impact force that propagates from the surface 400 to the plurality of microspheres 402. The fracture causes at least the portion 402A of the plurality of microspheres 402 to release the dye or the pigment 404 contained in the portion 402A of the plurality of microspheres 402, indicating that the object has impacted the airfoil 200, 300.

When the engine control system 206, 306 (shown in FIGS. 2 and 3, respectively) detects the occurrence of an impact of the object on the airfoil 200, 300 or the occurrence of another airfoil stress event based on signal processing of the data from the embedded one or more sensors 202, 302, a flag or other indicator is set to identify that an inspection of the airfoil 200, 300 may be needed. When on the ground, the airfoil 200, 300 can be inspected visually or with the aid of an imaging system for evidence of damage by looking for a color change on the surface 400 of the airfoil 200, 300. The presence of a color change at an area of the airfoil 200, 300 relative to a color of a rest of the airfoil 200, 300 indicates that at least the portion 402A of the plurality microspheres 402 on the surface 400 of the airfoil 200, 300 has released the dye or pigment 404. The color change at the area of the airfoil 200, 300 is due to a color of the dye or the pigment 404 contained in the plurality of microspheres 402 appearing against a background color of the airfoil 200, 300.

The inspection may be completed manually using the naked eye or by an automatic inspection imaging system (not shown). For example, an inspector can check for the presence of the color change with the naked eye (i.e., without the help of any viewing device). This can be done, for example, when the color change is clearly visible to the naked eye. In a case where the color change is not visible to the naked eye and a confirmation may be needed that the airfoil 200, 300 was hit by the object, the imaging system may be used instead. The imaging system may be programmed to detect the specific color of the dye or pigment 404 associated with the portion 402A of the plurality of microspheres 402 that are fractured. For example, the imaging system can include a camera or a spectrophotometer and can be configured to distinguish the color of the dye or pigment 404 from a background color of the airfoil 200, 300 (without the dye or pigment 404).

Therefore, in addition to the one or more sensors 202, 302, the dye or the pigment 404 can be used together with the one or more sensors 202, 302 to provide a way to double check that an object impacted the airfoil 200, 300. Alternatively, or in addition to the use of the dye or the pigment 404, a pressure sensitive film 408 (or peeling paint) also can be used to provide a way to double check that an object (e.g., a bird) impact took place. The pressure sensitive film 408 (that can, for example, change color when strain is applied) would allow an inspector to initially determine visually whether an object impacted the airfoil 200, 300. If an inspector determines that the pressure sensitive film 408 has changed color, for example, a further inspection of the airfoil 200, 300 can be performed to determine whether the dye or the pigment 404 in the plurality microspheres 402 is released confirming that the airfoil 200, 300 is impacted by an object.

Further aspects are provided by the subject matter of the following clauses.

An airfoil for an engine includes a core, a shell covering the core, and one or more sensors provided within the core or the shell, or both, the one or more sensors being configured to generate an electromagnetic signal when the airfoil is subjected to an impact force, the electromagnetic signal being processed to detect an impact of an object on the airfoil.

The airfoil of the preceding clause, the one or more sensors being at least one of a strain-measurement sensor, a capacitance-measurement sensor, a resistance-measurement sensor, or an accelerometer sensor.

The airfoil of any preceding clause, the shell including a polymeric matrix composite.

The airfoil of any preceding clause, the core including a foam or a honeycomb structure.

The airfoil of any preceding clause, the one or more sensors being located within a half of a span of the airfoil closer to a tip of the airfoil.

The airfoil of any preceding clause, the one or more sensors being provided in a location of the airfoil being subject to higher strain.

The airfoil of any preceding clause, the one or more sensors being provided with an energy harvesting unit, the energy harvesting unit being configured to harvest energy from a movement of the airfoil and to convert the movement of the airfoil into electrical energy to power the one or more sensors, or to harvest energy from heat, electromagnetic energy, or light and to convert the heat, electromagnetic energy, or light into electrical energy to power the one or more sensors.

The airfoil of any preceding clause, the one or more sensors being provided with an energy storage unit configured to power the one or more sensors or the one or more sensors powered through wires connected to a power source.

The airfoil of any preceding clause, the energy storage unit being rechargeable wirelessly using a magnetic charger.

The airfoil of any preceding clause, further including a plurality of microspheres incorporated in a surface of the shell, the plurality of microspheres containing a colored dye and are configured to fracture when the airfoil is subjected to the impact force and to release the colored dye contained therein to indicate that the airfoil is subjected to the impact force.

The airfoil of any preceding clause, the plurality of microspheres being distributed evenly on the surface or are provided at one or more preselected locations on the surface.

The airfoil of any preceding clause, the colored dye being visible to a naked eye or is visible to an imaging device to ascertain that the airfoil is impacted by the object.

The airfoil of any preceding clause, the plurality of microspheres being configured to fracture when subjected to the impact force from the object striking the airfoil that propagates from the surface to the plurality of microspheres.

The airfoil of any preceding clause, further including a receiver, the one or more sensors being wired or wireless, and are configured to communicate with the receiver, the receiver being configured to receive the electromagnetic signal from the one or more sensors and to output sensor data based on the electromagnetic signal indicating the impact of the object on the airfoil.

The airfoil of any preceding clause, the one or more sensors being configured to communicate with the receiver wirelessly.

The airfoil of any preceding clause, the one or more sensors being configured to communicate with the receiver through a wired connection.

The airfoil of any preceding clause, the receiver being configured to transmit the output sensor data to an engine control system to provide an indication on a status of the airfoil based on the output sensor data.

The airfoil of any preceding clause, the receiver being configured to communicate with the engine control system wirelessly.

The airfoil of any preceding clause, the receiver being configured to communicate with the engine control system through a wired connection.

The airfoil of any preceding clause, the engine control system being located outside of the airfoil.

The airfoil of any preceding clause, wherein the receiver and the engine control system are located outside of the airfoil, and the receiver is configured to communicate with the one or more sensors wirelessly.

The airfoil of any preceding clause, wherein the one or more sensors are powered through wires connected to a power source.

The airfoil of any preceding clause, further comprising a receiver, wherein the one or more sensors are configured to communicate with the receiver, the receiver being configured to receive the electromagnetic signal from the one or more sensors and to output sensor data based on the electromagnetic signal indicating the impact of the object on the airfoil.

A turbine engine includes a fan and a turbo-engine defining a longitudinal centerline axis, the fan including a compressor section, a combustion section, and a turbine section in serial flow order. At least one of the fan or the turbo-engine includes a set of composite airfoils circumferentially arranged about the engine centerline. An airfoil of the set of composite airfoils includes a core, a shell covering the core, and one or more sensors provided within the core or the shell, or both. The one or more sensors are configured to generate an electromagnetic signal when the airfoil is subjected to an impact force, the electromagnetic signal being processed to detect an impact of an object on the airfoil.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. An airfoil (200, 300) for an engine (10, 100), the airfoil (200, 300) comprising:
a core (200B, 300B);
a shell (200A, 300A) covering the core (200B, 300B); and
one or more sensors (202, 302) provided within the core (200B, 300B) or the shell (200A, 300A), or both, wherein the one or more sensors (202, 302) are configured to generate an electromagnetic signal when the airfoil (200, 300) is subjected to an impact force, the electromagnetic signal being processed to detect an impact of an object on the airfoil (200, 300).

2. The airfoil (200, 300) of claim 1, wherein the one or more sensors (202, 302) are at least one of a strain-measurement sensor (202, 302), a capacitance-measurement sensor (202, 302), a resistance-measurement sensor (202, 302), or an accelerometer sensor (202, 302).

3. The airfoil (200, 300) of any preceding claim, wherein the shell (200A, 300A) comprises a polymeric matrix composite.

4. The airfoil (200, 300) of any preceding claim, wherein the core (200B, 300B) comprises a foam or a honeycomb structure.

5. The airfoil (200, 300) of any preceding claim, wherein the one or more sensors (202, 302) are located within a half of a span of the airfoil (200, 300) closer to a tip (200C) of the airfoil (200, 300).

6. The airfoil (200, 300) of any preceding claim, wherein the one or more sensors (202, 302) are provided in a location of the airfoil (200, 300) being subject to higher strain.

7. The airfoil (200, 300) of any preceding claim, wherein the one or more sensors (202, 302) are provided with an energy harvesting unit (202B), the energy harvesting unit (202B) being configured to harvest energy from a movement of the airfoil (200, 300) and to convert the movement of the airfoil (200, 300) into electrical energy to power the one or more sensors (202, 302), or to harvest energy from heat, electromagnetic energy, or light and to convert the heat, electromagnetic energy, or light into electrical energy to power the one or more sensors (202, 302).

8. The airfoil (200, 300) of any preceding claim, wherein the one or more sensors (202, 302) are provided with an energy storage unit (202A) configured to power the one or more sensors (202, 302) or the one or more sensors (202, 302) powered through wires connected to a power source, and optionally, the energy storage unit (202A) is rechargeable wirelessly using a magnetic charger.

9. The airfoil (200, 300) of any preceding claim, further comprising a plurality of microspheres (402) incorporated in a surface layer (400) of the shell (200A, 300A), the plurality of microspheres (402) containing a colored dye and are configured to fracture when the airfoil (200, 300) is subjected to the impact force and release the colored dye contained therein to indicate that the airfoil (200, 300) is subjected to the impact force, and optionally, the plurality of microspheres (402) are distributed evenly on the surface layer (400) or are provided at one or more preselected locations on the surface layer (400), and optionally, the colored dye is visible to a naked eye or is visible to an imaging device to ascertain that the airfoil (200, 300) is impacted by the object, and optionally, the plurality of microspheres (402) are configured to fracture when subjected to the impact force from the object striking the airfoil (200, 300) that propagates from the surface layer (400) to the plurality of microspheres (402).

10. The airfoil (200, 300) of any preceding claim, further comprising a receiver (204, 304), wherein the one or more sensors (202, 302) are wired or wireless, and are configured to communicate with the receiver (204, 304), the receiver (204, 304) being configured to receive the electromagnetic signal from the one or more sensors (202, 302) and to output sensor data based on the electromagnetic signal indicating the impact of the object on the airfoil (200, 300).

11. The airfoil (200, 300) of claim 10, wherein the one or more sensors (202, 302) are configured to communicate with the receiver (204, 304) wirelessly.

12. The airfoil (200, 300) of claim 10, wherein the one or more sensors (202, 302) are configured to communicate with the receiver (204, 304) through a wired connection (304A).

13. The airfoil (200, 300) of any one of claims 10-12, wherein the receiver (204, 304) is configured to transmit the output sensor (202, 302) data to an engine control system (206, 306) to provide an indication on a status of the airfoil (200, 300) based on the output sensor (202, 302) data.

14. The airfoil (200, 300) of claim 13, wherein the receiver (204, 304) is configured to communicate with the engine control system (206, 306) wirelessly or through a wired connection (304A), and optionally, the engine control system (206, 306) is located outside of the airfoil (200, 300).

15. A turbine engine (10, 100) comprising the airfoil (200, 300) of any preceding claim.
